# EUROPÄISCHE PATENTANMELDUNG

(11) **EP 0 727 610 A2**
(43) Veröffentlichungstag der Anmeldung: **21.08.1996**
(21) Anmeldenummer: 96890022.5
(22) Anmeldetag: 14.02.1996
(51) Int. Cl.: F23B 5/04, F23B 1/36, F23L 9/00

(54) **Heizkessel**

(30) Priorität: 16.02.1995 AT 283/95
(71) Anmelder: Georg Fischer Maschinen- und Kesselfabrik Gesellschaft m.b.H., 4722 Peuerbach (AT)
(72) Erfinder: Hellmayr, Siegfried, A-4722 Peuerbach (AT)
(74) Vertreter: Hübscher, Helmut, Dipl.-Ing.

(57) **Zusammenfassung**

Es wird ein Heizkessel mit einem Füllraum (4) für feste Brennstoffe oberhalb eines Rostes (5) und mit einer seitlich neben dem Füllraum (4) vorgesehenen Brennkammer (12) beschrieben, die einen zylindrischen Brennraum (11) mit horizontaler Längsachse bildet, der mit dem Füllraum (4) über einen im Anschluß an eine Stirnseite (15) tangential in den Brennraum (11) mündenden Rauchgaskanal (13) verbunden ist, in den eine Sekundärluftzuleitung (18) mündet. Um vorteilhafte Verbrennungsverhältnisse in der Brennkammer (12) zu schaffen. wird vorgeschlagen, daß die Sekundärluftzuleitung (18) auf der der Längsachse des Brennraumes (11) näheren Umfangsseite des Rauchgaskanales (13) in diesen mündet.

## Beschreibung

Die Erfindung bezieht sich auf einen Heizkessel mit einem Füllraum für feste Brennstoffe oberhalb eines Rostes und mit einer seitlich neben dem Füllraum vorgesehenen Brennkammer, die einen zylindrischen Brennraum mit horizontaler Längsachse bildet, der mit dem Füllraum über einen im Anschluß an eine Stirnseite tangential in den Brennraum mündenden Rauchgaskanal verbunden ist, in den eine Sekundärluftzuleitung mündet.

Bei Heizkesseln mit einer seitlich neben dem Füllraum für feste Brennstoffe angeordneten Brennkammer werden die bei der Verbrennung des Brennstoffes, vorzugsweise Holz, unter Primärluftzufuhr im Füllraum entstehenden Rauchgase zur vollständigen Verbrennung in die Brennkammer geleitet, die mit dem Füllraum über einen Rauchgaskanal verbunden ist, der in den zylindrischen Brennraum der Brennkammer im Anschluß an eine Stirnseite tangential einmündet, so daß diese Rauchgase den Brennraum entlang eines schraubenlinienförmigen Weges um die horizontale Längsachse des Brennraumes durchströmen. Diese schraubenlinienförmige Strömung stellt bei einer begrenzten Brennkammerlänge eine ausreichend lange Ausbrandstrecke sicher, was eine wesentliche Voraussetzung für eine schadstoffarme. vollständige Verbrennung ist. die selbstverständlich eine entsprechende Sekundärluftzufuhr zum Brennraum bedingt. Um den Sauerstoffbedarf der Verbrennung im Brennraum zu decken. wird bei bekannten Heizkesseln die Sekundärluft über Sekundärluftzuleitungen in den Brennraum eingeleitet, und zwar unmittelbar durch die Umfangswand der Brennkammer. Aufgrund dieser Sekundärluftzuführung ergeben sich im Einströmbereich in den Brennraum durch die radialen Strömungskomponenten bedingte Verwirbelungen mit den entlang der Brennkammerwandung strömenden Rauchgasen, was zu einer nicht unerheblichen Beeinträchtigung der schraubenlinienförmigen Rauchgasströmung und damit zu einem nachteiligen Einfluß auf die schadstoffarme Nachverbrennung der Rauchgase in der Brennkammer führt.

Bei einem anderen bekannten Heizkessel (DE 34 06 763 A1) mündet die Sekundärluftzuleitung im Rauchgaskanal zwischen dem Füllraum und der Brennkammer, und zwar durch die tagential in die Brennkammer übergehende Kanalwand hindurch, so daß die Rauchgase durch die zugeführte Sekundärluft von dieser Kanalwand weggeblasen und in einer Art verwirbelt werden, die eine tangentiale Rauchgasströmung entlang der Brennkammerwandung im wesentlichen verhindert. Dies wird auch nicht angestrebt, weil ja die Rauchgase die Brennkammer nicht axial, sondern quer zur horizontalen Längsachse durchsetzen.

Der Erfindung liegt somit die Aufgabe zugrunde, diese Mängel zu vermeiden und einen Heizkessel der eingangs geschilderten Art mit einfachen konstruktiven Mitteln so auszugestalten, daß die Nachverbrennung der Rauchgase in der Brennkammer merklich verbessert wird.

Die Erfindung löst die gestellte Aufgabe dadurch, daß die Sekundärluftzuleitung auf der der Längsachse des Brennraumes näheren Umfangsseite des Rauchgaskanales in diesen mündet.

Durch diese besondere Sekundärluftzufuhr wird zunächst eine Beeinträchtigung der Rauchgasströmung innerhalb des Brennraumes der Brennkammer zufolge einer Sekundärluftzufuhr über die Umfangswand der Brennkammer vermieden. Darüber hinaus werden die Rauchgase durch die im Bereich der der Längsachse des Brennraumes näheren Umfangsseite des Rauchgaskanales zugeführte Sekundärluft gegen die entferntere, äußere Umfangsseite des Rauchgaskanales gedrückt und in weiterer Folge in einer verbesserten Tangentialströmung in den Brennraum eingeleitet, so daß sich innerhalb des Brennraumes eine für den Ausbrand der Rauchgase vorteilhafte, ungestörte schraubenlinienförmige Rauchgasströmung entlang der Umfangswand der Brennkammer ausbilden kann. Die Zufuhr der Sekundärluft zu den Rauchgasen im wesentlichen quer zum Rauchgaskanal zwischen dem Füllraum und dem Brennraum stellt eine gute Durchmischung der Rauchgase mit der Sekundärluft sicher, ohne die Ausbildung einer vorteilhaften Rauchgasströmung in der Brennkammer zu beeinträchtigen. Bei einer entsprechenden Anpassung des sekundären Zuluftangebotes an den Sauerstoffbedarf für die vollständige Verbrennung der Rauchgase im Brennraum werden somit alle Bedingungen für besonders vorteilhafte Verbrennungswerte erfüllt.

Um besonders einfache Konstruktionsverhältnisse zu erhalten, kann die Sekundärluftzuleitung in weiterer Ausbildung der Erfindung durch eine äußere, abgedeckte Umfangsausnehmung in der den Rauchgaskanaldurchbruch aufweisenden Umfangswand der Brennkammer gebildet werden. Durch diese Maßnahme erübrigen sich gesonderte Sekundärluftzuleitungen mit ihren Anschlüssen an den Rauchgaskanal. Außerdem bietet diese Sekundärluftzuführung den Vorteil einer Luftvorwärmung im Wärmeaustausch über die heiße Umfangswand der Brennkammer. Dieser Wärmeaustausch kann dadurch verbessert werden, daß in der Umfangsausnehmung der Umfangswand der Brennkammer Wärmeleitrippen vorgesehen werden, die eine größere Wärmeübertragungsfläche mit sich bringen.

In der Zeichnung ist der Erfindungsgegenstand beispielsweise dargestellt. Es zeigen
- Fig. 1: einen erfindungsgemäßen Heizkessel für feste Brennstoffe in einem vereinfachten Vertikalschnitt.
- Fig. 2: einen Schnitt nach der Linie ll-ll der Fig. 1 und
- Fig. 3: einen Schnitt nach der Linie III-III der Fig. 2 in einem größeren Maßstab.

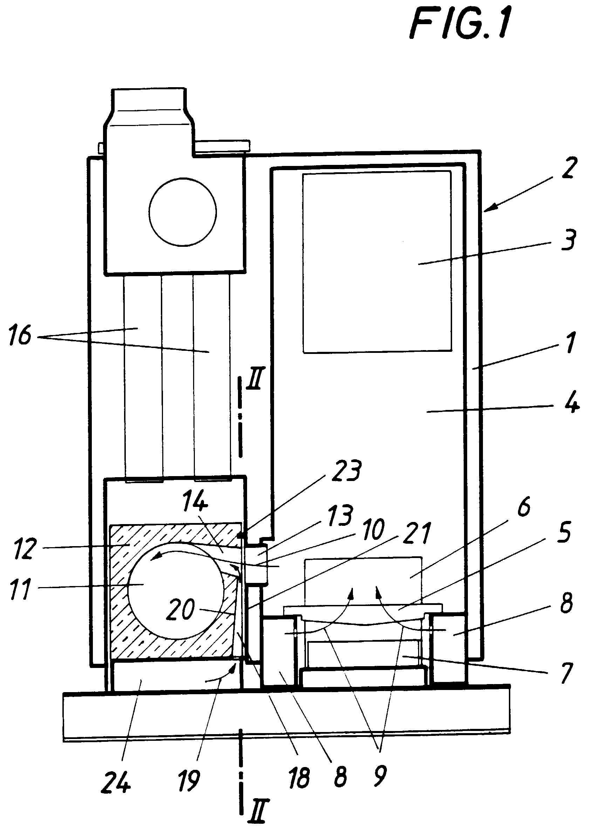

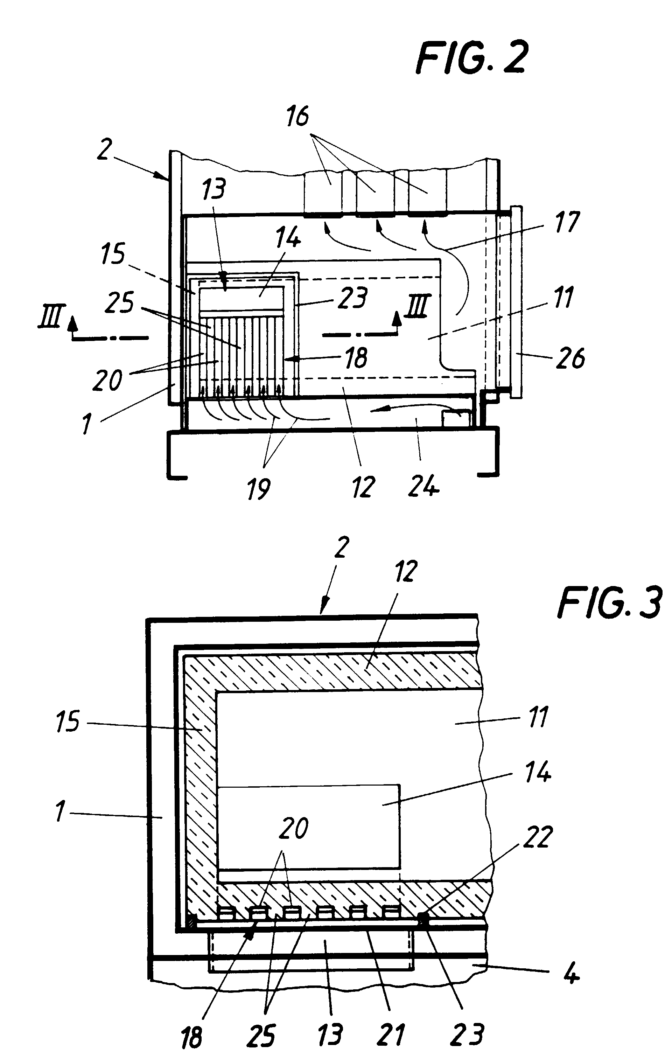

Der dargestellte Heizkessel weist ein einen Wassermantel 1 bildendes Gehäuse 2 auf, das einen über eine Fülltür 3 zugänglichen Füllraum 4 oberhalb eines Rostes 5 zur Aufnahme von festem Brennstoff, vorzugsweise Holz, bildet. Unterhalb dieses Rostes 5 ist eine über eine Aschentür 6 entnehmbare Aschenlade 7 vorgesehen. Zur Verbrennung des auf dem Rost 5 aufliegenden Brennstoffes wird diesem durch im Gehäuse 2 seitlich neben der Aschenlade 7 angeordnete Luftkanäle 8 Primärluft zugeführt, wie dies in der Fig. 1 durch Strömungspfeile 9 angedeutet ist. Die bei der Verbrennung und der dadurch bedingten Vergasung des Brennstoffes entstehenden Rauchgase werden mit Hilfe eines üblichen, aus Übersichtlichkeitsgründen nicht dargestellten Saugzuggebläses entsprechend dem Strömungspfeil 10 in den Brennraum 11 einer seitlich neben dem Füllraum 4 im Gehäuse 1 vorgesehenen Brennkammer 12 aus einem feuerfesten Werkstoff gesaugt, und zwar durch einen Rauchgaskanal 13, der im Bereich der Brennkammer 12 durch einen tangential in den Brennraum 11 mündenden Durchbruch 14 gebildet wird. Da dieser tangentiale Durchbruch 14 im Anschluß an eine Stirnwand 15 der Brennkammer 11 vorgesehen ist, stellt sich innerhalb der Brennkammer 12 eine von den Strömungskomponenten in Umfangsrichung und in axialer Richtung abhängige, schraubenlinienförmige Rauchgasströmung entlang der Umfangswandung des Brennraumes 11 ein. Auf diesem schraubenlinienförmigen Strömungsweg findet der vollständige Ausbrand der Rauchgase statt, die auf der dem Rauchgaskanal 13 gegenüberliegenden Stirnseite die Brennkammer 12 als schadstoffarmes Abgas verlassen und über einen Saugzug 16 abgezogen werden, wie dies durch die Strömungspfeile 17 in der Fig. 2 veranschaulicht ist.

Der für den vollständigen, schadstoffarmen Ausbrand der Rauchgase in der Brennkammer 12 benötigte Sauerstoff wird über eine Sekundärluftzuleitung 18 zugeführt, die nicht in herkömmlicher Weise unmittelbar im Brennraum 11 mündet, sondern vor dem Brennraum 11 im Rauchgaskanal 13, und zwar auf der der Längsachse der Brennkammer 12 näheren Umfangsseite des Rauchgaskanales 13. Diese Sekundärluftzuführung bewirkt, daß die Rauchgase 10 durch die quer zum Rauchgaskanal 13 einströmende Sekundärluft 19 gegen die von der Brennkammerlängsachse entferntere, äußere Umfangsseite des Rauchgaskanales 13 gedrängt werden, was zu einer verbesserten tangentialen Einströmung der mit der Sekundärluft 19 vermischten Rauchgase 10 und in weiterer Folge zu einer ungestörten Ausbildung einer schraubenlinienförmigen Strömung entlang der Umfangswandung des Brennraumes 11 führt, so daß durch diese Maßnahmen vorteilhafte Voraussetzungen für einen vollständigen, schadstoffarmen Ausbrand der Rauchgase innerhalb der Brennkammer 12 geschaffen werden.

Obwohl die konstruktive Ausgestaltung der Einleitung der Sekundärluft in den Rauchgaskanal 13 zwischen dem Füllraum 4 und dem Brennraum 11 von untergeordneter Bedeutung für die Wirkungsweise dieser Sekundärluftzufuhr ist, wenn nur eine entsprechende Rauchgasführung bei einer guten Vermischung mit der Sekundärluft sichergestellt wird, können besonders vorteilhafte Konstruktionsbedingungen dadurch erhalten werden, daß die Sekundärluftzuleitung 18 durch eine äußere Umfangsausnehmung 20 in der den Rauchgaskanaldurchbruch 14 aufweisenden Umfangswand der Brennkammer 12 gebildet wird. Diese Umfangsausnehmung 20 wird vorzugsweise durch die vom Wassermantel 1 gebildete Zwischenwand 21 zwischen Füllraum 4 und Brennkammer 12 abgedeckt, wobei zur Abdichtung eine in eine die Ausnehmung 20 umschließende Nut 22 eingelegte Dichtungsschnur 23 dienen kann. wie dies insbesondere die Fig. 3 erkennen läßt. Die über einen Zuluftkanal 24 unterhalb der Brennkammer 12 zugeführte Sekundärluft 19 strömt demnach durch die Umfangsausnehmung 20 in der Umfangswand der Brennkammer 12 zum Rauchgaskanal 13, wobei sie im Wärmeaustausch über die heiße Brennkammer 12 vorgewärmt wird. Diese Vorwärmung kann noch verbessert werden, wenn die Umfangsausnehmung 20 durch in Strömungsrichtung verlaufende Wärmeleitrippen 25 in einzelne Strömungskanäle unterteilt wird.

Über eine Reinigungstür 26 im Gehäuse 2 ist der die Brennkammer 12 aufnehmende Gehäuseabschnitt zugänglich, wobei entsprechend der Fig. 2 die Brennkammer 12 stirnseitig gegenüber dieser Reinigungstür 26 offen ausgebildet ist.

## Patentansprüche

1. Heizkessel mit einem Füllraum (4) für feste Brennstoffe oberhalb eines Rostes (5) und mit einer seitlich neben dem Füllraum (4) vorgesehenen Brennkammer (12), die einen zylindrischen Brennraum (11) mit horizontaler Längsachse bildet, der mit dem Füllraum (4) über einen im Anschluß an eine Stirnseite (15) tangential in den Brennraum (11) mündenden Rauchgaskanal (13) verbunden ist, in den eine Sekundärluftzuleitung (18) mündet, dadurch gekennzeichnet, daß die Sekundärluftzuleitung (18) auf der der Längsachse des Brennraumes (11) näheren Umfangsseite des Rauchgaskanales (13) in diesen mündet.

2. Heizkessel nach Anspruch 1. dadurch gekennzeichnet, daß die Sekundärluftzuleitung (18) durch eine äußere. abgedeckte Umfangsausnehmung (20) in der den Rauchgaskanaldurchbruch (14) aufweisenden Umfangswand der Brennkammer (12) gebildet ist.

3. Heizkessel nach Anspruch 2, dadurch gekennzeichnet, daß in der Umfangsausnehmung (20) der Umfangswand der Brennkammer (12) Wärmeleitrippen (25) vorgesehen sind.
